Europäisches Patentamt

European Patent Office

Office européen des brevets

(19)

(11) EP 0 713 116 A1

## (12) DEMANDE DE BREVET EUROPEEN

(43) Date de publication:
22.05.1996 Bulletin 1996/21

(51) Int Cl.6: **G02B 13/10**, G02B 26/10, H04N 3/09

(21) Numéro de dépôt: 95402542.5

(22) Date de dépôt: 14.11.1995

(84) Etats contractants désignés:
DE FR GB IT

(30) Priorité: 16.11.1994 FR 9413701

(71) Demandeur: THOMSON-CSF
75008 Paris (FR)

(72) Inventeurs:
• Rollin, Joel
F-92402 Courbevoie Cedex (FR)

• Fouilloy, Jean-Pierre
F-92402 Courbevoie Cedex (FR)
• Marche, Pierre
F-92402 Courbevoie Cedex (FR)

(74) Mandataire: Lincot, Georges
THOMSON-CSF,
SCPI,
B.P. 329,
50, rue Jean-Pierre Timbaud
F-92402 Courbevoie Cédex (FR)

(54) **Oculaire anamorphoseur et dispositif d'imagerie infrarouge équipé d'un tel oculaire**

(57) L'invention vise à résoudre le problème d'adaptation optique du champ d'observation d'un dispositif d'imagerie infrarouge aux dimensions des cellules de détection d'un tel dispositif, sans aberration dioptrique, sans complication mécanique et sans baisse de transmission.

Pour atteindre cet objectif, l'invention propose de mettre en oeuvre un oculaire anamorphoseur à deux prismes (31,32) disposés tête-bêche, dont les fonctions sont découplées, le premier (31) étant dédié à l'anamorphose pour la valeur de son angle au sommet et le second (32) aux compensations des dérives d'axe dues aux aberrations (chromatisme, dérive thermique, distorsion) par son utilisation au minimum de déviation et par les valeurs de son angle au sommet.

Application aux dispositifs d'imagerie infrarouge pour conjugaison optique de l'oculaire anamorphoseur (31,32) avec une lentille cylindrique (41) d'une combinaison de transport optique ($G_1, L_2, L_3$) pour compenser l'astigmatisme d'un tel oculaire.

FIG.5

## Description

L'invention concerne le domaine de l'imagerie, notamment de l'imagerie infrarouge dans lequel les bandes spectrales utiles sont celles qui favorisent la transmission atmosphérique. On utilise en particulier les bandes 3 à 5 μm et 8 à 12 μm pour lesquelles il existe des matériaux photosensibles bien adaptés à leur détection, par exemple de l'antimoine d'indium (InSb) ou un matériau composite de mercure-cadmium-tellium (Hg-Cd-Te). L'invention s'applique en particulier, mais non exclusivement, aux dispositifs d'imagerie infrarouge à balayage monodirectionnel, horizontal ou vertical, comportant un miroir de balayage de scène définissant un axe de visée pour une barrette détectrice d'axe principal orthogonal à la direction de balayage.

Les détecteurs d'imagerie infrarouge se présentent sous la forme d'une mosaïque de cellules élémentaires espacées, constituées d'un matériau photosensible et agencées pour former une barrette. Classiquement, une technologie de type TDI (initiales de l'expression anglo-saxonne "Time and Delay Integration" qui signifie Intégration Temporellement Retardée) est mise en oeuvre pour améliorer le rapport signal/bruit. Des raisons d'encombrement peuvent alors conduire à utiliser un espacement important entre les cellules dans la direction des circuits de traitement, supérieure à ce qui est souhaité pour des raisons optiques.

La technologie TDI utilise une mosaïque détectrice composée d'un grand nombre de rangées de quelques cellules disposées selon la direction de balayage pour former une barrette détectrice s'étendant selon une direction orthogonale. Les rangées peuvent être alignées, disposées en quinconce ou selon une architecture combinant ces deux modes. Chaque cellule d'une même rangée reçoit alors successivement, au cours du balayage, un même flux de lumière provenant de la même portion de scène. Les signaux de sortie des cellules d'une même rangée sont retardés en synchronisme avec la vitesse de balayage pour être cumulés dans un circuit sommateur.

La technologie TDI est réalisée plus précisément à l'aide de condensateurs de stockage de charges intégrés à l'arrière du plan du détecteur. Les conducteurs de liaison des cellules aux condensateurs occupent un espace non négligeable entre les cellules. Pour conserver un pas spatial compatible avec les lois d'échantillonnage, une solution est de réaliser des cellules de forme rectangulaire dont la longueur et la largeur s'étendent selon deux directions principales, respectivement la direction de balayage et une direction orthogonale à celle-ci. Dans ces conditions, le champ élémentaire de vue de chacune de ces cellules possède un champ de vue élémentaire δθ différent selon les deux directions orthogonales principales.

L'adaptation des champs élémentaires dans l'espace objet correspondant à ces cellules rectangulaires nécessite un système optique ayant deux distances focales différentes dans ces deux plans orthogonaux.

Ce problème a été résolu dans le domaine des radiations visibles, notamment par Brewster, en mettant au point des moyens anamorphoseurs, par exemple des prismes ou des lentilles cylindriques, pour modifier les champs contenus dans un plan d'anamorphose méridien, sans modifier l'image dans le plan orthogonal. Il est possible de quantifier l'étalement obtenu par la valeur d'un rapport dit d'anamorphose, égal au rapport de grossissements de l'élément anamorphoseur dans les deux directions principales.

De tels objectifs anamorphoseurs ont suivi le développement du cinéma et ont fait l'objet de nombreuses publications. On peut citer par exemple les brevets GB 1 296 573 et US 2 821 111.

Cependant, l'utilisation de tels moyens anamorphoseurs soulève plus particulièrement dans le domaine infrarouge un problème de variation directionnelle que subit le flux incident en traversant ces moyens anamorphoseurs. Cette variation est due principalement au chromatisme, aux dérives thermiques axiales et aux distorsions géométriques. L'ensemble de ces défauts est ci-après dénommé aberration dioptrique.

La mise en oeuvre d'un système à deux prismes, du type anamorphoseur de Brewster, constitués d'un même matériau, par exemple en germanium, cumule l'ensemble des défauts. Si deux matériaux différents, par exemple le silicium et le germanium, sont utilisés pour annuler le chromatisme de l'ensemble sur la bande infrarouge 3 à 5 μ, l'achromatisation du système provoque alors une augmentation très sensible de sa distorsion. L'utilisation de prismes de Brewster-Amici, constitués d'une séquence de matériaux différents, conduit quant à elle à une mise en oeuvre compliquée et entraîne des chutes rédhibitoires en transmission optique.

D'autre part, l'utilisation de lentilles cylindriques pour réaliser l'anamorphose provoque non seulement une défocalisation thermique mais également l'apparition d'un astigmatisme quand la température évolue. Cet astigmatisme provient du fait que ces lentilles contribuent à la puissance de l'objectif et que cette puissance évolue en fonction de la température de façon différente dans le plan parallèle aux génératrices de la lentille et dans un plan orthogonal. Pour corriger ce défaut, il est alors nécessaire de déplacer plusieurs groupes de lentilles ce qui entraîne, outre des difficultés de centrage inhérentes au système, l'utilisation d'une mécanique complexe et délicate.

L'invention vise à pallier ces défauts en mettant en oeuvre un oculaire anamorphoseur dépourvu d'aberration dioptrique, sans complication mécanique, tout en conservant une bonne transmission optique.

Pour atteindre cet objectif, l'invention propose un oculaire anamorphoseur à deux prismes dont les fonctions sont rigoureusement découplées : le premier prisme est dédié totalement à l'anamorphose, et le second prisme, utilisé au minimum de déviation afin de n'induire aucun effet anamorphoseur, est calculé de manière à compenser les défauts dioptriques induites par le premier prisme, les deux prismes étant de même indice de réfraction et étant utilisés en faisceaux parallèles.

Plus précisément, l'invention a pour objet un oculaire anamorphoseur comportant un premier et un second prismes constitués d'un matériau d'indice connu, disposés tête-bêche selon un même plan de section principale, caractérisé en ce que, le premier et le second prismes étant successivement traversés par un faisceau lumineux parallèle rayonnant dans une bande spectrale donné et se propageant selon un axe situé dans le plan de section principale, seul le premier prisme provoque une anamorphose du faisceau dans un rapport prédéterminé et présente un angle au sommet dont la valeur est réglée en fonction de celle du rapport d'anamorphose souhaité et de l'indice du matériau constitutif dans la bande spectrale donnée, en ce que le second prisme est orienté par rapport au faisceau émergeant du premier prisme pour être utilisé à son mimimum de déviation pour n'introduire aucune anamorphose, et en ce que le second prisme présente un angle au sommet dont la valeur est réglée en fonction de celles du rapport d'anamorphose et de l'indice pour obtenir une compensation de dérives d'axe du faisceau émergeant du premier prisme par une dérive d'axe et de distorsion du faisceau émergeant du second prisme, les dérives axiales et la distorsion étant induites par des aberrations dioptriques.

L'invention concerne également un dispositif d'imagerie infrarouge comportant notamment un miroir de balayage et une combinaison de transport optique, pour former dans le temps une image de scène sur une mosaïque détectrice infrarouge disposée dans un cryostat.

Selon un mode de réalisation, l'oculaire anamorphoseur est couplé à la combinaison de transport optique pour être intégré au dispositif d'imagerie infrarouge. La combinaison de transport comporte alors une lentille cylindrique afin d'obtenir une pupille de sortie unique pour l'ensemble du système optique composé de l'oculaire et de la combinaison de transport. La combinaison de transport est calculée pour que cette pupille de sortie coïncide avec l'ouverture réelle du cryostat définissant le diaphragme, appelé diaphragme froid, du détecteur. Or cette ouverture est classiquement conformée pour que le diaphragme froid ne laisse passer que le flux utile provenant de la scène, en arrêtant tous les flux parasites émis par des éléments de structure interne. Dans ces conditions, le détecteur ne reçoit non seulement que du flux utile, mais reçoit alors tout le flux utile .

La combinaison de transport se compose avantageusement de deux groupes de lentilles de puissance positive, qui donne une image intermédiaire réelle et accessible, calculé pour amener la pupille d'entrée du système optique sur l'axe de rotation du miroir de balayage du dispositif d'imagerie infrarouge pour les champs situés dans un plan perpendiculaire au plan d'anamorphose.

Dans le plan d'anamorphose, une lentille cylindrique placée au voisinage de l'image intermédiaire permet d'ajuster les conjugaisons pupillaires pour conserver la pupille d'entrée toujours sur le miroir de balayage. L'utilisation d'une lentille cylindrique qui fait office de groupe de champ permet finalement d'avoir une pupille unique en entrée, quelles que soient les orientations des champs, située sur le miroir de balayage. Ceci permet de diminuer les dimensions du miroir de balayage et de coupler avec précision le système optique à un groupe afocal frontal disposé classiquement en entrée des dispositifs d'imagerie.

D'autre part, l'existence d'une image intermédiaire peut être exploitée en plaçant au niveau de cette image un filtre de protection antilaser devenant opaque sous l'action d'un faisceau laser incident de forte puissance. Ces filtres, connus sous la dénomination "filtres absorbants saturables", permettent d'arrêter les faisceaux laser de menace. L'efficacité d'un tel filtre étant fonction de la densité optique qui le traverse, il est avantageux de le placer sur une face de la lentille cylindrique disposée sensiblement dans le plan de l'image intermédiaire.

La lentille cylindrique ne participe pas, dans les conditions de mise en oeuvre évoquées, à la puissance du système optique. La défocalisation thermique de ce système peut alors être corrigée par déplacement d'un seul groupe de lentilles. Ainsi, la mécanique associée pour réaliser une telle translation est simplifiée.

Le système optique d'un tel dispositif d'imagerie infrarouge forme sur la mosaïque détectrice une image non dégradée du fait que la transmission optique est effectuée par un minimum d'éléments et de l'absence de dérives d'axes de visée coïncidant avec l'axe optique de ce système.

D'autres caractéristiques et avantages de l'invention apparaîtront à la lecture de la description qui suit, au regard des figures annexées qui représentent respectivement :

-   figure 1, un exemple schématique de réalisation d'un oculaire anamorphoseur à prismes selon l'invention, vu en coupe selon le plan de section principale des prismes;
-   figure 2, un schéma illustrant la distortion de l'image, à travers un prisme, des lignes situées dans un plan orthogonal au plan de section principale de ce prisme;
-   figure 3, une vue en coupe schématisée d'un dispositif d'imagerie selon l'invention;
-   figures 4a et 4b, deux vues en coupe selon deux plans orthogonaux d'un exemple de combinaison de transport optique selon l'invention;
-   figure 5, une vue en coupe selon un plan de section principale d'une architecture optique d'un dispositif d'imagerie selon l'invention.

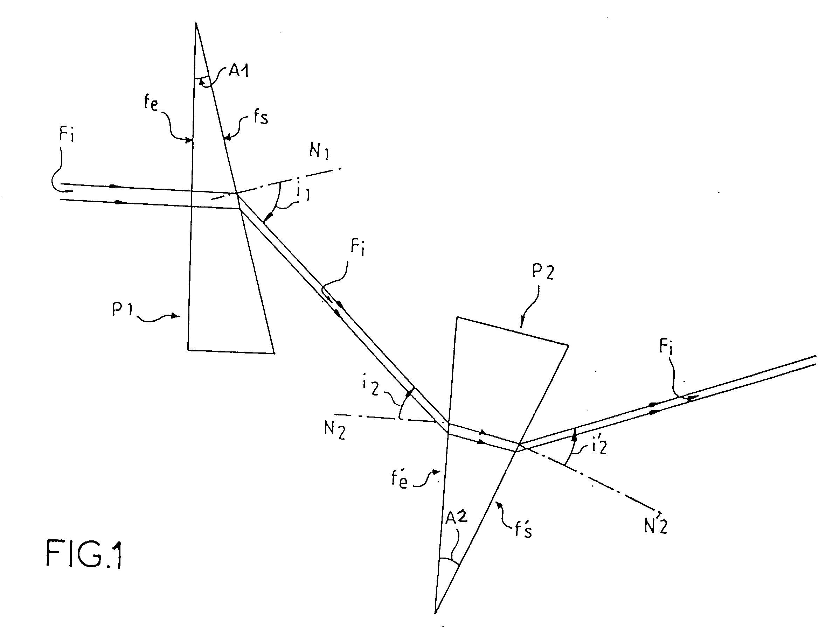

Un exemple schématique d'oculaire anamorphoseur selon l'invention est illustré sur la figure 1 en coupe selon un plan de section principale des prismes représentés. L'oculaire anamorphoseur comporte deux prismes de sections principales confondues avec le plan de la figure et disposés tête-bêche, un premier prisme $P_1$ d'angle au sommet $A_1$ et de faces principales $f_e$ et $f_s$, et un second prisme $P_2$ d'angle au sommet $A_2$ et de faces principales $f'_e$ et $f'_s$. Les deux prismes, formés dans le même matériau, possèdent un même indice de réfraction n.

Un faisceau lumineux parallèle incident $F_i$, de section circulaire, frappe la face d'entrée $f_e$ du premier prisme $P_1$ et émerge de la face de sortie $f_s$ de ce prisme sous forme d'un faisceau parallèle $F_i$. Le faisceau $F_i$ forme un angle $i_1$ avec la normale de sortie $N_1$ perpendiculaire à la face $f_s$. Afin de simplifier l'exposé, sans que cela constitue une contrainte de mise en oeuvre, le faisceau incident $F_i$ est représenté perpendiculaire à la face d'entrée $f_e$.

Le faisceau $F_i$ émergeant du prisme $P_1$ vient frapper la face d'entrée $f'_e$ du second prisme $P_2$ selon un angle $i_2$, mesuré par rapport à la normale $N_2$ à la face d'entrée, puis ressort de ce prisme $P_2$ par la face de sortie $f'_s$ selon un angle $i'_2$, mesuré par rapport à la normale $N'_2$ à la face $f'_s$.

Selon l'invention, seul le premier prisme est anamorphoseur. L'anamorphose est créée dans le plan de section principale par la déviation anisotrope opérée par le prisme sur le faisceau incident. Au sortir de ce prisme $P_1$, la section du faisceau n'est plus circulaire mais est rétrécie dans le plan de section principale, ce qui se traduit sur la figure par un rétrécissement du faisceau $F_i$ après traversée du prisme.

Ainsi, lorsque le faisceau $F_i$ balaie un champ d'observation, le faisceau émergent décrit un champ plus large dans le plan de section principale du fait du principe de la conservation de la quantité de flux lumineux transportée. Selon ce principe, le produit "champ balayé" × "section de pupille traversée" est constant pour un faisceau incident donné.

Plus précisément l'anamorphose peut être définie, pour un même champ balayé dans le plan de section principale et dans un plan orthogonal comme le rapport m entre les grossissements utilisés dans ces deux plans. En fonction des paramètres de ce premier prisme, ce rapport s'exprime par la relation suivante :

$$m = \frac{\cos A_1}{\cos i_1}$$

Il est alors possible de régler la valeur de l'angle au sommet $A_1$ pour obtenir un rapport d'anamorphose m donné lorsque le prisme est constitué d'un matériau d'indice n prédéterminé. En effet, la relation précédente combinée à la relation fondamentale $\sin i_1 = n \sin A_1$ [1] détermine la valeur de l'angle A1 en fonction de m et de n par l'expression :

$$\sin A_1 = \sqrt{\frac{m^2 - 1}{m^2 n^2 - 1}} \qquad [2]$$

Le second prisme $P_2$ est d'autre part orienté par rapport au faisceau émergent du premier prisme $P_1$ de manière à être utilisé à son minimum de déviation. Dans ces conditions, les angles d'incidence et d'émergence du faisceau $F_i$ sont identiques dans le plan de section principale pour lequel l'ange d'incidence $i_2$ est donc égal à l'angle d'émergence $i'_2$. Ainsi, le prisme $P_2$ n'introduit aucune anamorphose supplémentaire.

Selon l'invention, le prisme $P_2$ est réglé pour compenser l'ensemble des aberrations dioptriques introduites dans le premier prisme $P_1$. Les aberrations dioptriques peuvent se traduire, directement ou par équivalence paramétrique comme expliqué plus loin, par une variation d'indice. Si l'angle du second prisme, $A_2$, est ajusté convenablement, les prismes, utilisés dans les mêmes conditions -même matériau, même bande spectrale, même section principale-, provoquent des aberrations diotriques identiques, ce qui se traduit par une même variation d'indice.

Selon l'invention, l'angle au sommet du second prisme $A_2$ est choisi pour que la dérive directionnelle $\Delta i_2$ du faisceau émergeant du second prisme, induite par une variation d'indice $\Delta n$, compense la dérive directionnelle de l'angle de sortie $\Delta i_1$ du faisceau $F_i$ émergeant du premier prisme, induite par une même variation d'indice $\Delta n$. Plus précisément, un calcul optique élémentaire montre que les variations d'orientation $\Delta i_1$ et $\Delta i_2$ s'expriment par les relations suivantes, en fonction de l'indice n :

$$\Delta i_1 = \frac{\Delta n}{n} \tan i_1$$

$$\Delta i_2 = \frac{2 \, \Delta n \sin\left(\frac{A2}{2}\right)}{\sqrt{1 - n^2 \sin^2\left(\frac{A2}{2}\right)}}$$

En égalisant les deux expressions précédentes, il est possible d'en déduire la valeur de l'angle au sommet $A_2$ du second prisme en fonction de n et de $i_1$, qui permet de compenser exactement les variations directionnelles. En utilisant les expressions [1] et [2] précédentes, le réglage de l'angle $A_2$ peut alors se déduire des valeurs de n et de m.

La variation d'indice $\Delta n$ est provoquée par les défauts dioptriques qui ont pour origine le chromatisme, la dérive axiale en température, et la distorsion qui provoque une courbure des lignes perpendiculairement au plan de section principale.

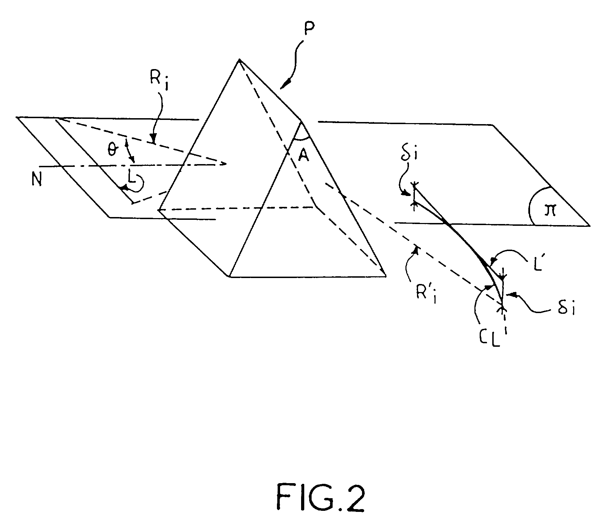

Ce dernier effet est bien connu des spécialistes en spectroscopie. Il est illustré par la figure 2, qui représente en vue cavalière un prisme P d'angle au sommet A défini dans un plan de section principale du prisme. Une portion de ligne L, formée dans un plan $\Pi$ perpendiculaire au plan de section principale du prisme pour une optique de polarisation (non représentée), a une image dans le plan $\Pi$ formée par passage à travers le prisme P qui présente une certaine courbure. Un rayon incident $R_i$ provenant d'un point de la ligne L et qui forme un angle θ avec la normale N du plan de section principale dans le plan Π, a pour image un rayon émergeant R'$_i$ à travers le prisme P. Le calcul montre que pour trouver l'angle d'émergence du rayon R'$_i$, il est possible d'utiliser les relations classiques de propagation à travers un prisme dans le plan de section principale si l'on remplace l'indice n du prisme P par un indice équivalent $n + \Delta n$ pour lequel :

$$\Delta n = \frac{1}{2} \frac{(n^2 - 1)\theta^2}{n}$$

Cette dernière relation est une approximation valable dans le domaine des faibles valeurs de θ. La distorsion induite est maximale aux extrémités de la portion de courbe C$_R$ et peut être mesurée dans un plan perpendiculaire au plan de section principale par l'écart en bord de champ δ$_i$ entre cette courbe C$_R$ et l'image sans distorsion L' de la ligne L. Classiquement, un tel prisme est utilisé en spectroscopie en position horizontale confondue avec son plan de section principale et les raies apparaissent sous forme de lignes verticales ayant une certaine courbure mesurée par rapport au plan horizontal.

Pour fixer les idées, un oculaire anamorphoseur selon l'invention se compose de deux prismes en silicium d'indice égal à 3,4254 à la longueur d'onde moyenne de la bande spectrale 3-5 µm; cet oculaire réalise une anamorphose de rapport m égal à 2 lorsque les angles au sommet A$_1$ et A$_2$ du premier et du second prisme ont respectivement pour valeur 14,807° et 22,600°, et lorsque le faisceau incident, pris perpendiculairement à la face d'entrée du premier prisme, ressort de ce prisme et pénètre dans le second prisme (utilisé à son minimum de déviation) sous les angles i$_1$ et i$_2$ respectivement égaux à 61,093° et 42,160°.

Un tel oculaire anamorphoseur selon l'invention, adapté au cahier des charges suivant :

- champ vertical ± 10,2°
- champ vertical ± 1,25° en entrée de l'anamorphoseur, juste après le miroir de balayage
- anamorphose effectuée sur le champ horizontal, possède un chromatisme négligeable, l'anamorphose étant alors limitée par la diffraction élémentaire, une dérive d'axe limitée à 0,005 mrad pour des écarts de température de $\Delta T = \pm 40°$ C et une courbure des lignes verticales en bord de champ induite sur les lignes verticales en bord de champ, de l'ordre de 0,3 mrad.

Tous les défauts mentionnés restent très largement inférieurs aux valeurs habituelles des champs élémentaires des cellules de détection, comme nous le verrons plus loin.

Quant au rapport d'anamorphose, le calcul montre que ses variations, provoquées par exemple par un écart de température ± 40° C ou le long d'un champ d'observation horizontal de ±1,25° dans le plan de section principale, ne dépasse pas 0,3 %, ce qui reste là encore négligeable.

Un dispositif anamorphoseur tel que celui qui vient d'être décrit peut être intégré dans un dispositif d'imagerie infrarouge, par exemple une caméra d'observation dans la bande spectrale infrarouge 3-5 µm. Dans ce cas, l'oculaire anamorphoseur est couplé à une combinaison de transport optique qui forme une image finale sur une mosaïque détectrice et qui est adaptée à l'oculaire pour présenter une pupille de sortie unique dans un plan prédéterminé. Quel que soit le plan de propagation lumineuse considéré, par exemple le plan de section principale de l'oculaire anamorphoseur ou un plan orthogonal à celui-ci, la pupille de sortie se trouve alors positionnée dans un même plan.

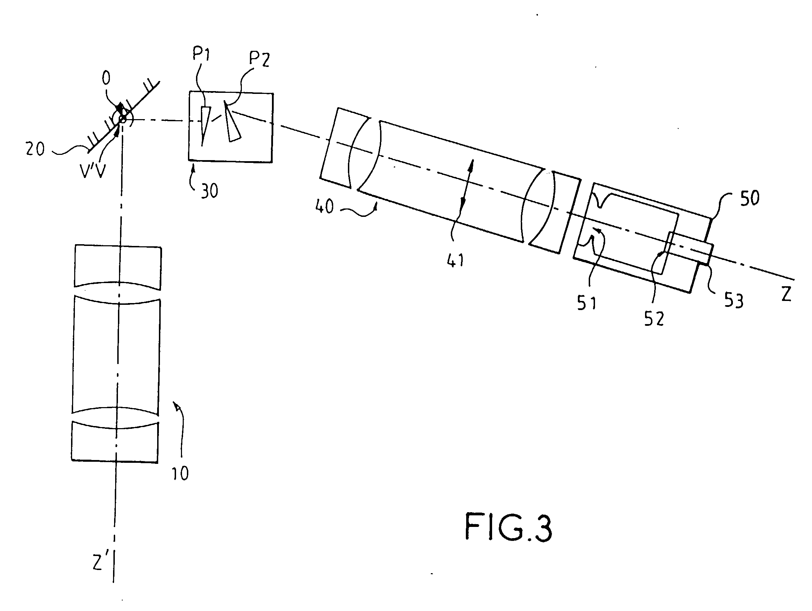

La figure 3 représente de manière schématisée une vue en coupe d'un dispositif d'imagerie infrarouge selon l'invention. Cet exemple de réalisation est celui d'une caméra infrarouge à balayage horizontal. La figure 3 illustre, en coupe horizontale, les principaux éléments en rapport avec l'invention. Sur l'axe optique brisé Z'OZ de la caméra, situé dans le plan horizontal, se succèdent dans le sens de propagation de la lumière, un groupe afocal frontal 10, qui permet de bien adapter les champs balayés par la caméra aux besoins opérationnels, un miroir de balayage oscillant 20 d'axe vertical V'V perpendiculaire au plan de la figure qui assure l'exploration horizontale de l'image d'une scène observée par la caméra dans un champ de vue donné, un oculaire anamorphoseur 30 couplé à une combinaison de transport d'image 40 pour former le système optique de la caméra, et un cryostat 50. Ce cryostat définit un diaphragme 51, appelé ci-après écran froid, et abrite une mosaïque de détection 52 formant une barrette orientée selon une direction perpendiculaire à la direction de balayage ; la mosaïque est associée à un circuit électronique de traitement de signal (non représenté). La mosaïque est refroidie pas un doigt froid 53 maintenu à environ 77°K par une machine de refroidissement (non représentée).

La combinaison de transport optique 40 est destinée à transporter l'image de la portion de scène instantanée formée par le miroir de balayage horizontal 20 jusqu'à la mosaïque détectrice 52. Cette combinaison peut, d'autre part, être calculée de manière à définir une pupille d'entrée pour l'ensemble de traitement du flux incident 20-50, qui coïncide sensiblement avec l'axe de rotation V'V du miroir 20. Dans ces conditions, les dimensions de ce miroir peuvent être réduites à des valeurs minimales et sont donc optimisées. Un tel calcul de combinaison optique ne soulève pas de problème particulier.

Le groupe afocal frontal 10, de conception connue, fonctionne alors directement pour l'ouverture instantanée de l'ensemble de traitement optique : aucun décalage de pupille induit par le balayage ne se produit.

L'oculaire anamorphoseur 30 est du type décrit précédemment. Il se compose des deux prismes P$_1$ et P$_2$, disposés tête-bêche selon un même plan de section principale coïncidant avec le plan horizontal. Un tel dispositif anamorphoseur, achromatique, corrigé des dérives thermiques et pratiquement dépourvu de distorsions, permet de réduire le champ élémentaire de vue de chaque cellule de détection dans le plan horizontal coïncidant avec le plan de section principale des prismes.

Ceci permet l'obtention de champs élémentaires de mêmes valeurs dans le plan de section principale et dans un plan orthogonal, vertical dans l'exemple de réalisation sur les cellules de détection. En effet, les cellules, de forme rectangulaire pour les raisons exposées plus haut, sont plus larges que hautes et s'étendent en largeur dans le plan de balayage horizontal.

La réduction de champ horizontal est alors provoquée par la valeur supérieure de la distance focale du système optique dans le plan de section principale coïncident avec le plan de balayage horizontal. Dans ces conditions, les champs élémentaires verticaux et horizontaux sont semblables si le rapport d'anamorphose est choisi égal au rapport dimensionnel entre la largeur et la hauteur des cellules.

La combinaison de transport optique comporte une lentille de champ cylindrique 41 pour compenser l'astigmatisme pupillaire en entrée de cette combinaison. Cet astigmatisme pupillaire est provoqué par le dispositif anamorphoseur 30 qui induit la formation de pupilles d'entrée décalées dans le plan de section principale et dans le plan vertical orthogonal comme illustré plus loin. La lentille cylindrique 41 est d'axe vertical dans l'exemple exposé, et présente des faces plan-convexe calculées pour que la puissance optique dans le plan horizontal compense le décalage pupillaire. De plus, le calcul de la combinaison de transport peut être adapté de façon à ce que la pupille d'entrée, image du diaphragme d'ouverture, soit sur l'axe de rotation du miroir de balayage et qu'elle ne dépende pas en position de l'orientation du champ.

L'écran froid 51 constitue le diaphragme d'ouverture de la caméra. Les pupilles d'entrée sont conjuguées par les optiques composant l'oculaire et les prismes de ce diaphragme d'ouverture. Un tel écran est classiquement adapté de façon à ne laisser passer que les faisceaux utiles, en interrompant les signaux parasites émis ou renvoyés par les éléments de structure internes à la caméra. Ainsi, en faisant coïncider le diaphragme d'ouverture réel de la combinaison de transport optique, qui limite la pupille de sortie du système optique, avec l'écran froid, il est assuré que la mosaïque détectrice ne reçoit non seulement que le flux utile provenant de la scène observée, mais également tout le flux utile. Pour une adaptation complète, le diaphragme froid peut être de forme elliptique, les rapports dimensionnels entre le grand et le petit axe valant le rapport d'anamorphose.

Il est à noter que la lentille 41 ne contribue pas à la puissance optique produite par la combinaison de transport 40, puisqu'elle est calculée pour ne provoquer qu'une translation de pupille dans le plan de section principale du système anamorphoseur 30. En agissant comme lentille de champ dans ces conditions, les défocalisations thermiques de cette combinaison sont identiques dans tous les plans, de sorte que la méthode de compensation classique par déplacement d'un seul groupe de lentilles de la combinaison, reste applicable.

Il est avantageux d'introduire dans la combinaison de transport, un filtre de protection du type absorbant saturable pour obtenir une protection anti-menace laser. Un tel filtre est d'autant plus efficace que la densité optique est élevée. Or le miroir de balayage 20 et l'oculaire anamorphoseur 30 opérant en faisceaux parallèles, une image réelle peut être formée dans la combinaison de transport optique. En disposant la lentille cylindrique 41 approximativement dans le plan de formation de cette image intermédiaire et en déposant sur l'une des faces de cette lentille cylindrique un filtre anti-menace, il est possible d'obtenir un maximum de densité optique au niveau de cette lentille et donc une protection optimisée.

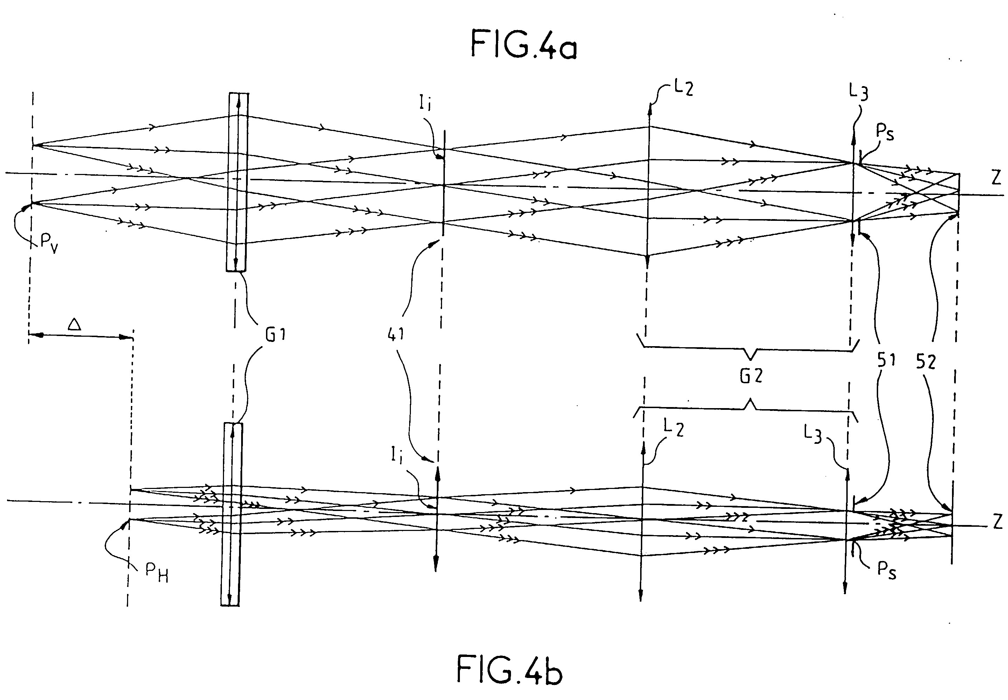

Les figures 4a et 4b représentent plus précisément le trajet optique d'un faisceau incident provenant d'une scène observée, après traversée de l'anamorphoseur à prismes, respectivement dans un champ de vue vertical égal à $2 \times 10,2°$ selon le plan vertical, et $2 \times 2,54°$ en entrée du transport optique, soit $2 \times 1,27°$ en entrée de l'oculaire, selon le plan horizontal couvert par le miroir de balayage horizontal. Les figures 4a et 4b montrent plus particulièrement les conjugaisons pupillaires réalisées par la combinaison de transport optique, respectivement dans le plan vertical coïncidant avec le champ de vue vertical, et dans le plan horizontal coïncidant avec le champ de vue horizontal.

La combinaison de transport optique est calculée pour que l'image de la pupille d'entrée formée sur le miroir de balayage soit projetée sur le détecteur 52, que ce soit dans le plan vertical ou horizontal. Cependant, comme il a été expliqué plus haut, l'oculaire anamorphoseur provoque un astigmatisme pupillaire qui se traduit sur les figures 4a et 4b par un décalage $\Delta$ entre l'image de la pupille d'entrée du système optique obtenue par l'oculaire anamorphoseur, appelée $P_v$ dans le plan vertical et $P_h$ dans le plan horizontal .

Sur les figures 4a et 4b, les trajets successifs du faisceau incident pour les extrémités et le centre de la barrette sont matérialisés par les rayons marginaux des faisceaux, respectivement par les simple et triple fléchages, et par le double fléchage. La combinaison optique 40 est composée de deux groupes optiques $G_1$ et $G_2$ qui réalisent une conjugaison pupillaire entre la pupille (non représentée) située sur le miroir de balayage 20, et la pupille de sortie $P_s$ du système optique. La combinaison est calculée pour que cette pupille de sortie coïncide avec l'ouverture du diaphragme du diaphragme froid 51, quelles que soient la position des pupilles d'entrée $P_v$ et $P_h$.

La lentille cylindrique 41 est disposée dans le plan de formation de l'image intermédiaire $I_i$ et calculée pour produire une puissance optique uniquement dans le champ de vue horizontal afin de faire coïncider l'image de la pupille $P_h$ avec l'écran froid 51. En ce qui concerne le champ de vue vertical, la combinaison de transport est calculée pour obtenir directement cette conjugaison pupillaire entre $P_v$ et la pupille de l'écran froid 51 sans que la lentille cylindrique 41 ne produise de puissance optique dans ce champ de vue.

L'image intermédiaire $I_i$ est formée entre les groupes optiques $G_1$ et $G_2$. Le groupe optique $G_2$ peut être plus précisément formée de deux lentilles $L_2$ et $L_3$, la lentille $L_2$ constituant avec le groupe optique de tête $G_1$ un groupe afocal de type Kepler formant une image intermédiaire réelle et accessible. La lentille $L_3$ est un objectif de reprise de focalisation finale sur le plan de la mosaïque détectrice 52.

Dans cet exemple de réalisation, la combinaison de transport optique possède une distance focale globale de 22, 6 mm pour s'adapter aux dimensions physiques de la mosaïque de détection $8,1 mm \times 2 mm$. Chaque cellule de détection élémentaire ayant, dans cet exemple de réalisation, une dimension égale à $28 \mu m \times 40 \mu m$, les angles au sommet des prismes de l'oculaire anamorphoseur peuvent être choisis pour que le rapport d'anamorphose m soit égal à 2. Ainsi sans l'adjonction de cet oculaire anamorphoseur à prismes, les champs élémentaires $\delta\theta$ de chaque cellule valent respectivement :

$$\delta\theta = \frac{0,028}{22,6} = 1,24 \ mrd \text{ selon la direction verticale}$$

$$\delta\theta = \frac{0,040}{22,6} = 1,8 \ mrd \text{ selon la direction horizontale}$$

L'utilisation de l'anamorphoseur double la résolution élémentaire selon la dimension horizontale, car le champ élémentaire objet passe à:

$$\delta\theta = \frac{1,8}{2} \ mrd = 0,9 \ mrd$$

Ainsi, l'utilisation d'un anamorphoseur selon l'invention permet bien d'adapter le champ élémentaire dans une direction sans affecter la résolution pour la direction perpendiculaire. La condition d'égalité des champs élémentaires dans les directions perpendiculaires n'est pas nécessaire, elle n'a été citée précédemment qu'à titre d'exemple.

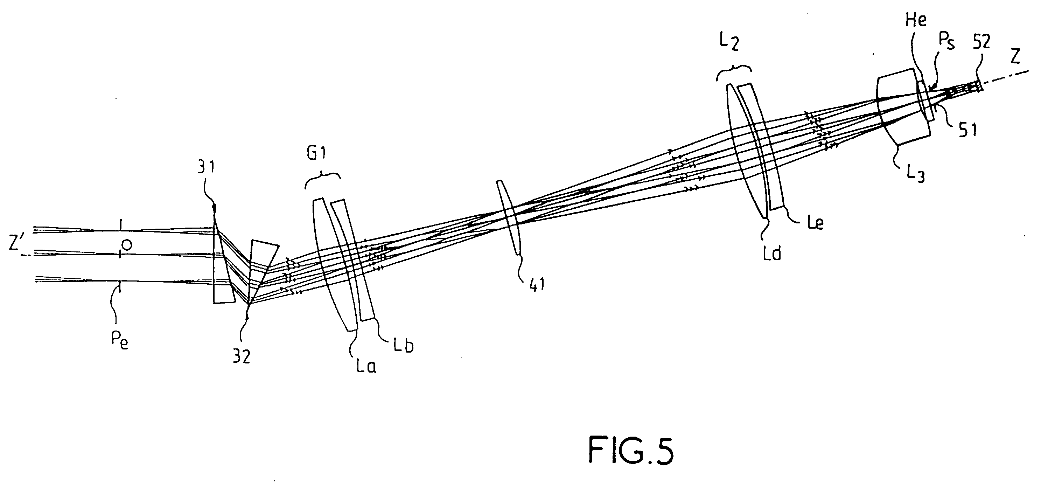

La figure 5 représente une vue en coupe selon un plan de section principale d'une architecture optique d'un exemple de dispositif d'imagerie selon l'invention. Sur cette figure, les éléments vus précédemment ont encore même référence. La figure montre en particulier la pupille d'entrée $P_1$ du miroir de balayage et les rayons simple flèche et triple flèche correspondent aux extrémités de la mosaïque, les rayons double flèche étant associés au centre de la barrette. Le groupe de lentilles de tête $G_1$ de la combinaison de transport d'image est formée de deux lentilles $L_a$ et $L_b$, respectivement convergente et divergente, la lentille cylindrique 41 est plan-convexe, la lentille $L_1$ du groupe arrière $G_2$ est composée de deux lentilles $L_d$ et $L_e$, respectivement convergente et divergente, et le cryostat n'est représenté que par son hublot d'entrée $H_e$. Comme indiqué précédemment, le rayon de courbure de la face convexe de la lentille cylindrique est adapté pour réaliser la conjugaison pupillaire avec le diaphragme froid 51 dès lors que son matériau est fixé. Dans cet exemple de réalisation, la lentille 41 est en silicium. Il est à noter que la direction correspondant au centre du champ (rayons doublement fléchés) est déviée après traversée de l'oculaire anamorphoseur.

Selon un procédé classique dans la bande spectrale 3-5 $\mu m$, les lentilles de puissances positives, $L_a$ du groupe $G_1$ et $L_d$ du groupe $G_2$, sont en silicium, les lentilles divergentes $L_b$ du groupe $G_1$ et $L_e$ du groupe $G_2$ sont en germanium, de façon à corriger le chromatisme du transport optique. La lentille $L_3$, objectif de repère de focalisation, est en silicium.

L'invention n'est pas limitée aux exemples de réalisation décrits et représentés. Il est par exemple possible de placer l'oculaire anamorphoseur entre les lentilles $L_2$ et $L_3$ de la figure 5, dès lors que l'image est rejetée à l'infini dans cet espace intermédiaire de la combinaison optique de transport d'image sans dégrader la qualité optique. Dans ce cas, il est possible de rapprocher le miroir de balayage pour diminuer l'encombrement global.

D'autre part, l'oculaire anamorphoseur selon l'invention peut être utilisé pour d'autres applications. Il peut par exemple permettre une adaptation d'un détecteur donné à une résolution optique prédéterminée. En effet, l'oculaire anamorphoseur permet, grâce à sa largeur supérieure dans le plan de section principale, d'augmenter virtuellement le nombre de cellules élémentaires de détection dans la direction horizontale. Par exemple, si la mosaïque comporte $288 \times 16$ cellules carrées, et en supposant que les 288 éléments jointifs couvrent la direction verticale de l'image, un coefficient d'anamorphose de 1,5 permet une résolution de 576 cellules équivalentes sur une ligne horizontale lorsque l'image de télévision est au format 4/3.

Un autre exemple d'application est, dans le cas d'un balayage vertical, l'adaptation optique de la mosaïque de détection aux standards de télévision. En effet, lorsque l'on cherche à balayer une image de télévision avec un détecteur horizontal couvrant la largeur totale de l'image, la géométrie de celle-ci dans le plan du détecteur est entièrement définie, en particulier l'écartement entre les lignes. La mosaïque de détection comprenant plusieurs rangées de cellules, la distance entre les rangées est égale à la distance entre les lignes de l'image pour que toutes les périodes d'intégration soient simultanées. Cependant, pour un détecteur déterminé, cette coïncidence ne peut être assurée que pour un standard déterminé. L'oculaire anamorphoseur selon l'invention permet alors d'adapter un détecteur conçu pour un certain standard à un autre standard, en choisissant un rapport d'anamorphose égal au rapport entre la distance entre rangées du détecteur et la distance entre les lignes de l'autre standard de télévision.

## Revendications

1. Oculaire anamorphoseur comportant un premier et un second prismes constitués d'un matériau d'indice connu, disposés tête-bêche selon un même plan de section principale, caractérisé en ce que, le premier et le second prismes étant successivement traversés par un faisceau lumineux parallèle ($F_i$) rayonnant dans une bande spectrale donné et se propageant selon un axe situé dans le plan de section principale, seul le premier prisme ($P_1$) provoque une anamorphose du faisceau ($F_i$) dans un rapport prédéterminé et présente un angle au sommet ($A_1$) dont la valeur est réglée en fonction de celle du rapport d'anamorphose souhaité et de l'indice du matériau constitutif dans la bande spectrale donnée, en ce que le second prisme ($P_2$) est orienté par rapport au faisceau ($F_i$) émergeant du premier prisme ($P_{1)}$) pour être utilisé à son mimimum de déviation pour n'introduire aucune anamorphose, et en ce que le second prisme ($P_2$) présente un angle au sommet ($A_2$) dont la valeur est réglée en fonction de celles du rapport d'anamorphose et de l'indice pour obtenir une compensation de dérives d'axe du faisceau ($F_i$) émergeant du premier prisme par une dérive d'axe et de distorsion du faisceau ($F_i$) émergeant du second prisme ($P_2$), les dérives axiales et la distorsion étant induites par des aberrations dioptriques.

2. Dispositif d'imagerie infrarouge comportant un miroir de balayage monodirectionnel (20) d'axe (V'V) orthogonal à la direction de balayage, une barrette de détection (52) orientée selon l'axe du miroir et composée d'une mosaïque de cellules élémentaires de forme rectangulaire définie par un rapport dimensionnel largeur/hauteur et photosensibles dans une bande spectrale infrarouge donnée, la largeur s'étendant selon la direction de balayage, et une combinaison de transport optique (40) pour former une image d'un champ de scène instantané sur la barrette de détection (52), la barrette étant disposée dans un cryostat (50) équipé d'un diaphragme d'ouverture (51) définissant un écran froid pour la barrette, caractérisé en ce qu'il comporte en outre un oculaire anamorphoseur (30) du type selon la revendication 1, conjugué optiquement de la combinaison de transport (40) pour former un système optique et disposé de sorte que le plan de section principale soit décrit par la direction de balayage, en ce que les angles au sommet ($A_1$, $A_2$) des prismes ($P_1$, $P_2$) et leur matériau sont choisis pour que, dans la bande spectrale de sensibilité de la barrette, la valeur du rapport d'anamorphose, fonction de la valeur du rapport dimensionnel des cellules de détection, soit ajusté de façon à ce que le rapport des champs élémentaires verticaux et horizontaux dans l'espace objet soit égal à une valeur prédéterminée, et en ce que la combinaison de transport optique (40) comporte une lentille cylindrique (41) d'axe perpendiculaire au plan de section principale, cette lentille étant calculée pour former en conjugaison avec la combinaison optique (40) une pupille d'entrée unique ($P_e$) sur un miroir de balayage.

3. Dispositif d'imagerie infrarouge selon la revendication 2, caractérisé en ce que le diaphragme froid est de forme elliptique, le rapport des longueurs des axes principaux de l'ellipse étant égal au rapport d'anamorphose.

4. Dispositif selon la revendication 2, caractérisé en ce que la combinaison de transport optique (40) forme dans un plan une image intermédiaire ($I_i$), et en ce que la lentille cylindrique (41) est placée dans le plan de formation de l'image intermédiaire ($I_i$).

5. Dispositif selon la revendication 4, caractérisé en ce qu'un filtre anti-menace laser est disposé sur une face de la lentille cylindrique (41) de forme planconvexe.

6. Dispositif selon l'une des revendications 3 à 5, caractérisé en ce que la combinaison de transport optique (40) comporte un premier ($G_1$) et un second ($G_2$) groupe optique dans l'ordre de propagation des faisceaux lumineux, qui réalisent une conjugaison pupillaire entre la pupille d'entrée située sur l'axe (V'V) du miroir de balayage (20) et la pupille de sortie ($P_s$) coïncidant avec l'ouverture de l'écran froid (51).

7. Dispositif selon la revendication 6, caractérisé en ce que le second groupe optique ($G_2$) se compose d'un premier ensemble optique ($L_2$) et d'un objectif de reprise ($L_3$) dans l'ordre de propagation lumineuse, la première lentille ($L_2$) constituant avec le premier groupe ($G_1$) un groupe afocal de type Kepler et la seconde lentille ($L_3$) formant une image finale sur la mosaïque détectrice (52).

8. Dispositif selon la revendication 7, caractérisé en ce que le premier groupe optique (G1) est formé d'une lentille convergente ($L_a$) et d'une lentille divergente ($L_b$), en ce que la première lentille (L2) du second groupe optique (G2) se compose de deux lentilles ($L_d$, $L_e$) respectivement convergente et divergente et en ce que les matériaux des lentilles convergentes sont différents des matériaux des lentilles divergentes pour anihiler le chromatisme du transport optique.

**9.** Dispositif selon l'une des revendications 2 à 8, caractérisé en ce que l'oculaire anamorphoseur (30) est disposé devant la combinaison de transport optique (40) dans l'ordre de propagation de la lumière, ou bien entre les optiques ($L_2, L_3$) du second groupe optique ($G_2$).

**10.** Dispositif d'imagerie selon l'une des revendications 2 à 9, caractérisé en ce que, les cellules élémentaires étant de forme carrée et photosensibles dans un domaine spectrale infrarouge, l'oculaire anamorphoseur est calculé pour obtenir une résolution d'image de valeur prédéterminée dans la direction où est effectuée l'anamorphose.

**11.** Dispositif d'imagerie selon l'une des revendications 2 à 9, caractérisé en ce que, le balayage étant vertical et la barrette orientée horizontalement, l'oculaire anamorphoseur est calculé pour adapter la barrette à un standard de télévision en choisissant une valeur de rapport d'anamorphose égale au rapport entre la distance entre les rangées des cellules de la barrette et la distance interligne du standard de télévision.

FIG.1

FIG.2

FIG.3

FIG.4a

FIG.4b

FIG.5

Office européen
des brevets

**RAPPORT DE RECHERCHE EUROPEENNE**

Numero de la demande

EP 95 40 2542

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>A | EP-A-0 256 826 (RANK PULLIN CONTROLS LTD)<br>* le document en entier *<br>--- | 1<br>2,9-11 | G02B13/10<br>G02B26/10<br>H04N3/09 |
| A | EP-A-0 423 409 (GEC-MARCONI)<br>* le document en entier *<br>--- | 1,2 | |
| A | EP-A-0 499 421 (GEC-MARCONI)<br>* le document en entier *<br>----- | 1,2 | |

| DOMAINES TECHNIQUES RECHERCHES (Int.Cl.6) |
|---|
| G02B<br>H04N |

Le présent rapport a été établi pour toutes les revendications

| Lieu de la recherche | Date d'achèvement de la recherche | Examinateur |
|---|---|---|
| LA HAYE | 6 Février 1996 | Ward, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)